# EUROPÄISCHE PATENTANMELDUNG

(11) **EP 4 087 087 A2**
(43) Veröffentlichungstag der Anmeldung: **09.11.2022**
(21) Anmeldenummer: 22172140.0
(22) Anmeldetag: 06.05.2022
(51) Int. Cl.: H02J 7/00

(54) **ENERGIEVERSORGUNGSSYSTEM**

(30) Priorität: 06.05.2021 DE 102021111861
(71) Anmelder: Instagrid GmbH, 71636 Ludwigsburg (DE)
(72) Erfinder: Berning, Sebastian, 70597 Stuttgart (DE); Gutknecht, Philipp, 71297 Mönsheim (DE); Zürner, Raphael, 71636 Ludwigsburg (DE)
(74) Vertreter: Patentanwälte Bauer Vorberg Kayser

(57) **Zusammenfassung**

Die Erfindung betrifft ein Energieversorgungssystem (1) mit einer Vielzahl von Batteriemodulen, wobei jedes Batteriemodul einen ersten elektrischen Anschluss und einen zweiten elektrischen Anschluss aufweist, über welche die Batteriemodule in einem Verschaltungszweig (10) des Energieversorgungssystems (1) in Serie geschaltet sind, wobei jedes Batteriemodul ferner einen Akkumulator aufweist, der über eine Brückenschaltung des Batteriemoduls mit dem ersten elektrischen Anschluss und dem zweiten elektrischen Anschluss verschaltbar ist, und mit einem Ladepfad (7), über den das Energieversorgungssystem (1) geladen werden kann, sowie mit einem Entladepfad (8), über den das Energieversorgungssystem (1) elektrische Energie an einen angeschlossenen Verbraucher abgeben kann, wobei das Energieversorgungssystem (1) ein Schaltmittel (9) aufweist, an das der Ladepfad (7), der Entladepfad (8) und der Verschaltungszweig (10) angeschlossen sind, und wobei das Schaltmittel (9) den Ladepfad (7) und/oder den Entladepfad (8) mit dem Verschaltungszweig (10) elektrisch leitfähig verbinden kann.

## Beschreibung

Die Erfindung betrifft ein Energieversorgungssystem. Zur mobilen Versorgung von leistungsfähigen Maschinen und Fahrzeugen, insbesondere mit einer Ausgangsleistung über 1kW, kommen heutzutage überwiegend Verbrennungsmotoren zum Einsatz. Zur Reduktion von Umwelt- und Gesundheitsbelastung durch Abgase und Lärm werden solche Energieversorgungssysteme zunehmend durch solche auf der Basis von Batteriespeichern ersetzt.

Für viele Anwendungen ist es dabei vorteilhaft, wenn ein solches Energieversorgungssystem eine Wechselspannung bereitstellen kann. Als Beispiel seien Verbraucher angeführt, die zum Betrieb an einer üblichen Netz-Wechselspannung geeignet sind oder Elektromotoren wie beispielsweise 3-phasige Asynchronmaschinen. Des Weiteren ist es für leistungsstarke Verbraucher wünschenswert, eine möglichst hohe Versorgungsspannung bereitzustellen, um erforderliche Betriebsströme und somit auch elektrische Verluste kleinzuhalten. Hierzu sei die zentraleuropäische Netzwechselspannung von 230 V mit einem Scheitelwert von 325 V als Beispiel genannt oder die typische Spannung von 400 V bei mobilen elektrischen Antrieben.

Um aus einer Gleichspannung eines Energieversorgungssystems mit Batteriespeichern eine Wechselspannung zu erzeugen, wird ein elektrischer Umrichter benötigt. Hier kommen heute fast ausschließlich sogenannte Zwei- oder Dreipunktwechselrichter zum Einsatz, die aus einer Zwischenkreisspannung (Batteriespannung) mittels Zerhackens und Glättens eine 1- oder 3-Phasige, sinusförmige Ausgangsspannung erzeugen.

Die Druckschrift US 3867643 A beschreibt einen alternativen elektrischen Umrichter, bei dem eine mehrstufige Umrichtung erfolgt. Dabei wird eine Vielzahl von Gleichstromquellen, zum Beispiel Batterien, jeweils durch eine Brückenschaltung periodisch entweder in Serie in den Strompfad geschaltet oder überbrückt, sodass eine sich ergebende Ausgangsspannung einen annähernd sinusförmigen Verlauf annimmt. Die Druckschrift US 5642275 A führt die Implementierung dieser Umrichtertechnik mit Batteriemodulen aus, wobei jedes Batteriemodul mindestens eine Gleichstromquelle und eine Brückenschaltung aufweist. Solche Umrichter werden in der Literatur häufig als "cascaded multilevel inverter/converter" oder "modular multilevel inverter/converter" bezeichnet. Umrichter dieser Art haben sich gegenüber Zwei- bzw. Dreipunkt-Umrichtern als vorteilhaft herausgestellt, insbesondere im Hinblick auf Kosten, thermische Verluste und Baugröße.

Es soll ermöglicht werden, dass ein solches Energieversorgungssystem sowohl einem Verbraucher elektrische Energie bereitstellt als auch Energie beispielsweise aus einem Versorgungsnetz bezieht. Der Erfindung liegt deshalb die Aufgabe zugrunde, ein Energieversorgungssystem mit einem "cascaded multilevel inverter/converter" bereitzustellen, das sowohl einen Ladevorgang als auch einen Entladevorgang durchführen kann, und bei dem ein Wechsel zwischen dem Ladevorgang und dem Entladevorgang einfach bewerkstelligt werden kann.

Die Aufgabe wird gelöst durch Angabe des Energieversorgungssystems nach Anspruch 1. Die Unteransprüche betreffen verschiedene voneinander unabhängige, vorteilhafte Weiterbildungen der vorliegenden Erfindung, deren Merkmale vom Fachmann im Rahmen des technisch Sinnvollen frei miteinander kombiniert werden können. Die Erfindung betrifft ein Energieversorgungssystem mit einer Vielzahl von Batteriemodulen, wobei jedes Batteriemodul einen ersten elektrischen Anschluss und einen zweiten elektrischen Anschluss aufweist, über welche die Batteriemodule in einem Verschaltungszweig des Energieversorgungssystems in Serie geschaltet sind, wobei jedes Batteriemodul ferner einen Akkumulator aufweist, der über eine Brückenschaltung des Batteriemoduls mit dem ersten elektrischen Anschluss und dem zweiten elektrischen Anschluss verschaltbar ist, und mit einem Ladepfad, über den das Energieversorgungssystem geladen werden kann, sowie mit einem Entladepfad, über den das Energieversorgungssystem elektrische Energie an einen angeschlossenen Verbraucher abgeben kann, wobei das Energieversorgungssystem ein Schaltmittel aufweist, an das der Ladepfad, der Entladepfad und der Verschaltungszweig angeschlossen sind, und wobei das Schaltmittel den Ladepfad und/oder den Entladepfad mit dem Verschaltungszweig elektrisch leitfähig verbinden kann.

Ein solches Gerät kann unmittelbar an einer Wechselspannungsquelle geladen werden und ferner einem Verbraucher elektrische Energie in Form von Wechselspannung bereitstellen. Mittels einer geeigneten Ansteuerung der Brückenschaltungen in den Batteriemodulen ist es möglich, eine Wechselspannung zu erzeugen. Je nach Schaltzustand des Schaltmittels kann der Verschaltungszweig auf unterschiedliche Weise mit dem Ladepfad und/oder dem Entladepfad verschaltet werden. Eine solche Verschaltung kann grundsätzlich in verschiedenen Modi erfolgen, so ist erfindungsgemäß eine einpolige oder eine zweipolige Umschaltung zwischen dem Ladepfad und dem Entladepfad denkbar. Bei der Brückenschaltung kann es sich grundsätzlich um eine Brückenschaltung beliebiger Art handeln. Erfindungsgemäß denkbar ist der Einsatz einer Halbbrücke, bevorzugt einer Vollbrücke. Mit Hilfe der Brückenschaltung ist es bevorzugt möglich, den Akkumulator auf verschiedene Weise mit dem Verschaltungszweig zu verschalten. So ist es erfindungsgemäß denkbar, das Batteriemodul mit unterschiedlichen Polaritäten zu verschalten, oder dass das Batteriemodul mittels der Brückenschaltung überbrückt wird. Um die Brückenschaltung in geeigneter Weise ansteuern zu können, weist das Energieversorgungssystem bevorzugt eine Steuereinheit auf. Das Energieversorgungssystem ist bevorzugt recht kompakt dimensioniert. Somit handelt es sich vorzugsweise um ein tragbares/mobiles Energieversorgungssystem, das beispielsweise auf Baustellen variabel eingesetzt werden kann, um elektrische Energie bereitzustellen.

Es ist bevorzugt, wenn das Schaltmittel wahlweise eine Verschaltung entweder des Ladepfads oder des Entladepfads mit dem Verschaltungszweig ermöglicht. Mit anderen Worten ermöglicht das Schaltmittel ausschließlich Schaltzustände, bei denen sämtliche Pole des Verschaltungszweigs entweder mit Ladepfad oder mit dem Entladepfad verbunden sind. Somit können Fehlerfälle wie beispielsweise eine Verbindung des Ladepfads mit dem Entladepfad vermieden werden. Besonders bevorzugt ist das Schaltmittel so ausgebildet, dass es den Ladepfad von dem Entladepfad zu jedem Betriebszeitpunkt galvanisch trennt. Dies kann durch eine geeignete Gestaltung des Schaltmittels gewährleistet werden, was nachfolgend noch erläutert wird.

Es ist vorteilhaft, wenn das Schaltmittel mindestens ein Relais aufweist. Ein Relais erlaubt eine fernbetätigte Änderung einer Verschaltung des Verschaltungszweigs mit dem Ladepfad beziehungsweise mit dem Entladepfad. Dabei ist prinzipiell der Einsatz verschiedenster Relaistypen denkbar. Es ist insbesondere Vorteilhaft, wenn es sich bei dem Relais um ein Sicherheitsrelais handelt.

Es kann erfindungsgemäß vorgesehen sein, dass das Energieversorgungssystem eine mit dem mindestens einen Relais gekoppelte Verriegelungsschaltung aufweist, die sicherstellt, dass der Ladepfad von dem Verschaltungszweig getrennt ist, wenn das mindestens eine Relais den Entladepfad mit dem Verschaltungszweig elektrisch leitfähig verbindet, und die sicherstellt, dass der Entladepfad von dem Verschaltungszweig getrennt ist, wenn das mindestens eine Relais den Ladepfad mit dem Verschaltungszweig elektrisch leitfähig verbindet. Auf diese Weise wird sichergestellt, dass der Entladepfad von dem Ladepfad zu jedem Betriebszeitpunkt galvanisch getrennt ist. Hierzu können die Relais Hilfskontakte aufweisen, die in geeigneter Weise miteinander verschaltet sind.

Gemäß einer vorteilhaften Ausführungsform der Erfindung weist das Schaltmittel zwei DPST-Relais mit Spiegelkontakten oder ein DPDT-Relais auf. Ein DPST-Relais schaltet nur in einer Schaltstellung durch, ein DPDT-Relais hingegen in beiden Schaltstellungen. Dementsprechend ist DPST definiert als "Dual Pole, Single Throw", während DPDT für "Dual Pole, Double Throw" steht. Eine Ausführung der DPST-Relais mit Spiegelkontakten erlaubt eine Kopplung der DPST-Relais, die gewährleistet, dass diese den angeschlossenen Ladenpfad beziehungsweise Entladepfad nicht gleichzeitig mit dem Verschaltungszweig verbinden können. Das DPDT-Relais sollte bevorzugt als ein Sicherheitsrelais mit zwei Öffnern und zwei Schließern ausgebildet sein, welche mittels einer Zwangsführung miteinander verbunden sind. Somit kann eine galvanische Trennung beispielsweise auch bei einpoligen Schaltfehlern sichergestellt werden.

Bevorzugt weist das Energieversorgungssystem keine isolierende Konverterschaltung zwischen dem Verschaltungszweig und dem Ladepfad beziehungsweise dem Entladepfad auf. Eine Kopplung des Verschaltungszweigs mit dem Ladepfad und/oder mit dem Entladepfad mittels einer Konverterschaltung würde ebenfalls eine galvanische Trennung des Verschaltungszweigs von dem Ladepfad bzw. von dem Entladepfad gewährleisten, erfindungsgemäß soll dies aber mittels einer vorteilhaften alternativen Bauform erreicht werden. Unter einer Konverterschaltung soll vorliegend eine Schaltung umfassend zumindest einen Transformator verstanden werden.

Es kann erfindungsgemäß vorgesehen sein, dass der Ladepfad und der Entladepfad jeweils zwei Zweige aufweisen. Unter einem Zweig soll hierbei jeweils ein Strompfad zu verstehen sein. Die beiden Zweige sind mit einem durch den Verschaltungszweig gebildeten Zweipol über das Schaltmittel koppelbar.

Das Energieversorgungssystem ist bevorzugt ausgestattet mit einem Eingangsfilter in dem Ladepfad und mit einem Ausgangsfilter in dem Entladepfad, wobei das Eingangsfilter eine vergleichsweise hohe Gesamtinduktivität aufweist und für vergleichsweise niedrige Ströme ausgelegt ist, und wobei das Ausgangsfilter eine vergleichsweise niedrige Gesamtinduktivität aufweist und für vergleichsweise hohe Ströme ausgelegt ist. Unter der Gesamtinduktivität des jeweiligen Filters ist dessen gesamte Induktivität zu verstehen, und zwar unabhängig davon, ob das Filter durch ein Bauteil oder durch mehrere Bauteile verwirklicht ist. Für die Anforderungen beim Laden des Energieversorgungssystems an einem öffentlichen Versorgungsnetz beziehungsweise die Abgabe von Energie über den Entladepfad ist es vorliegend möglich, das Eingangsfilter und das Ausgangsfilter unterschiedlich zu dimensionieren. Durch die Aufteilung der Filter kann Gewicht und Bauraum eingespart werden, da ansonsten ein Filter in dem Verschaltungszweig mit einer hohen Gesamtinduktivität benötigt werden würde, das außerdem für einen hohen Strom ausgelegt sein müsste.

Das Eingangsfilter und das Ausgangsfilter sind bevorzugt derart ausgelegt, dass Störgrößen, die beispielsweise durch Schaltvorgänge von Brückenschaltungen des mobilen Energieversorgungssystems hervorgerufen werden, möglichst gut unterdrückt werden. Unter der Formulierung, dass das Eingangsfilter beziehungsweise das Ausgangsfilter für einen gewissen Strom ausgelegt ist, ist zu verstehen, dass das Eingangsfilter beziehungsweise das Ausgangsfilter mit einem solchen Strom dauerhaft beaufschlagt werden kann, ohne dass gemeinhin unerwünschte Effekte auftreten. So sollte eine dauerhafte Beaufschlagung zumindest bis zum vollständigen Auf- bzw. Entladen der Energieversorgungseinrichtung mit diesem Strom möglich sein, ohne dass eine thermische Beschädigung von Komponenten und/oder Strompfaden eintritt. Dies kann ferner so zu verstehen sein, dass eine dauerhafte Beaufschlagung mit diesem Strom zumindest bis zum vollständigen Auf- bzw. Entladen der Energieversorgungseinrichtung möglich ist, und ohne dass ein induktives Bauelement des jeweiligen Filters in der Spitze (Scheitelstrom) mehr als 50% seiner Nenn-Induktivität verliert.

Besonders bevorzugt weist das Eingangsfilter eine Gesamtinduktivität auf, die mindestens zweimal so groß ist wie eine Gesamtinduktivität des Ausgangsfilters, und wobei das Ausgangsfilter für einen Strom ausgelegt ist, der mindestens zweimal so groß ist wie ein Strom, für den das Eingangsfilter ausgelegt ist. Es ist weiter vorteilhaft, wenn das Eingangsfilter eine Gesamtinduktivität aufweist, die mindestens viermal so groß ist wie eine Gesamtinduktivität des Ausgangsfilters, und wobei das Ausgangsfilter für einen Strom ausgelegt ist, der mindestens viermal so groß ist wie ein Strom, für den das Eingangsfilter ausgelegt ist. Gemäß einer erfindungsgemäßen Variante weist das Eingangsfilter eine Gesamtinduktivität von mindestens 200 µH, bevorzugt mindestens 400 µH auf, und ist für einen maximalen Strom von maximal 8 A, bevorzugt maximal 6 A ausgelegt, und das Ausgangsfilter weist eine Gesamtinduktivität von maximal 100 µH, bevorzugt maximal 50 µH auf und ist für einen maximalen Strom von mindestens 12 A, bevorzugt mindestens 16 A ausgelegt. Eine entsprechende Auslegung wäre vorteilhaft bei einer Betriebsspannung von 230 V. In Abhängigkeit von der Betriebsspannung und gegebenenfalls weiteren Parametern kann jedoch auch eine abweichende Auslegung der Filter gewählt werden.

Das Eingangsfilter ist bevorzugt in einer LC-Konfiguration oder einer LCL-Konfiguration ausgeführt. Die LC-Konfiguration ist bevorzugt gebildet durch ein induktives und ein kapazitives Bauelement, während die LCL-Konfiguration durch zwei induktive und ein kapazitives Bauelement gebildet wird. Es ist erfindungsgemäß möglich, dass das Ausgangsfilter in einer LC-Konfiguration ausgeführt ist. Das Ausgangsfilter kann also dieselbe Bauform aufweisen wie das Eingangsfilter, wobei jedoch eine abweichende Dimensionierung der Bauelemente im Entladepfad und im Ladepfad vorgesehen werden sollte.

Gemäß einer besonderen Ausführungsform der Erfindung weist das Energieversorgungssystem ein Eingangsfilter in dem Ladepfad und ein Ausgangsfilter in dem Entladepfad auf, wobei das Ausgangsfilter ohne ein induktives Bauelement ausgeführt ist, und wobei in dem Verschaltungszweig mindestens ein induktives Bauelement den Batteriemodulen vorgeschaltet ist. Das Eingangsfilter weist bei dieser Ausführungsform hingegen bevorzugt ein induktives Bauelement auf. Kapazitive Bauelemente des Eingangsfilters und des Ausgangsfilters sind bevorzugt ausschließlich in dem Ladepfad beziehungsweise dem Entladepfad angeordnet, nicht jedoch in dem Verschaltungszweig. Bei dieser Ausführungsform der Erfindung können sich das Eingangsfilter und das Ausgangsfilter das induktive Bauelement in dem Verschaltungszweig sozusagen teilen. Da das Ausgangsfilter in dem Entladepfad somit überhaupt kein induktives Bauelement aufweist und das induktive Bauelement des Eingangsfilters platzsparender dimensioniert werden kann, lässt sich Bauraum einsparen.

In dem Ladepfad ist vorzugsweise ein EMV-Filter angeordnet, das eine vergleichsweise hohe Filterinduktivität sowie eine vergleichsweise hohe Filterkapazität aufweist und für vergleichsweise niedrige Ströme ausgelegt ist, und wobei in dem Entladepfad ein EMV-Filter angeordnet ist, das eine vergleichsweise niedrige Filterinduktivität sowie eine vergleichsweise niedrige oder keine Filterkapazität aufweist und für vergleichsweise hohe Ströme ausgelegt ist. Die Filterinduktivitäten der EMV-Filter werden bevorzugt durch stromkompensierte Drosseln gebildet. Sie sind somit speziell zur Dämpfung von Störemissionen und im Besonderen zur Unterdrückung von Gleichtakt-Störungen geeignet.

Dabei ist es vorteilhaft, wenn die Filterinduktivität des EMV-Filters in dem Ladepfad mindestens zweimal so groß ist wie die Filterinduktivität des EMV-Filters in dem Entladepfad und wobei die Filterkapazität des EMV-Filters in dem Ladepfad mindestens zweimal so groß ist wie die Filterkapazität des EMV-Filters in dem Entladepfad.Gemäß einer möglichen Variante der Erfindung weist das EMV-Filter in dem Entladepfad eine stromkompensierte Drossel von höchstens 1,5 mH und optional eine anschlussseitige Kapazität von höchstens 1,0 µF auf, während das EMV-Filter in dem Ladepfad eine stromkompensierte Drossel von mindestens 3,0 mH und eine anschlussseitige Kapazität von mindestens 2,0 µF aufweist. Anschlussseitig ist diejenige Seite der EMV-Filter angeordnet, die den Anschlüssen des Lade- bzw. Entladepfads zugewandt sind, das heißt dem Anschluss des Ladepfads, über den dieser beispielsweise an ein Versorgungsnetz angeschlossen werden kann und dem Anschluss des Entladepfads, über den dieser beispielsweise an einen Verbraucher angeschlossen werden kann.

Es ist vorteilhaft, wenn das EMV-Filter in dem Entladepfad für einen mindestens zweimal, alternativ mindestens viermal so großen Strom ausgelegt ist wie das EMV-Filter in dem Ladepfad. Bevorzugt ist das EMV-Filter in dem Entladepfad für einen Strom von mindestens 18 A ausgelegt und das EMV-Filter in dem Ladepfad ist für einen Strom von höchstens 4,5 A ausgelegt. Gemäß einer weiteren vorteilhaften Variante der Erfindung ist das EMV-Filter in dem Entladepfad für einen Strom von mindestens 15 A ausgelegt und das EMV-Filter in dem Ladepfad ist für einen Strom von höchstens 7,5 A ausgelegt. Die EMV-Filter werden durch ihre unterschiedliche Auslegung den Anforderungen im Lade- bzw. Entladepfad besser gerecht.

Es ist erfindungsgemäß möglich, dass in dem Ladepfad ein Strommessgerät angeordnet ist, das für einen vergleichsweise niedrigen maximalen Messstrom ausgelegt ist, und dass in dem Entladepfad ein Strommessgerät angeordnet ist, das für einen vergleichsweise hohen maximalen Messstrom ausgelegt ist. Somit muss nicht ein gemeinsames Strommessgerät im Verschaltungszweig bereitgestellt werden, das sowohl einen vergleichsweise hohen maximalen Messstrom messen kann als auch einen vergleichsweise geringen Messstrom mit einer ausreichenden Genauigkeit ermitteln kann. Der maximale Messstrom wird durch den nominellen Messbereich des jeweiligen Strommessgeräts festgelegt.

Es ist vorteilhaft, wenn der maximale Messstrom des Strommessgeräts in dem Entladepfad mindestens fünfmal so groß ist wie der maximale Messstrom des Strommessgeräts in dem Ladepfad. Es ist besonders vorteilhaft, wenn der maximale Messstrom des Strommessgeräts in dem Entladepfad mindestens zehnmal so groß ist wie der maximale Messstrom des Strommessgeräts in dem Ladepfad. So kann gemäß einer Ausführungsform der Erfindung der maximale Messstrom des Strommessgeräts in dem Ladepfad höchstens 15 A betragen, während der maximale Messstrom des Strommessgeräts in dem Entladepfad mindestens 75 A beträgt. Gemäß einer weiteren Ausführungsform der Erfindung beträgt der maximale Messstrom des Strommessgeräts in dem Ladepfad höchstens 10 A, während der maximale Messstrom des Strommessgeräts in dem Entladepfad mindestens 100 A beträgt.

Es ist ferner vorteilhaft, wenn in dem Verschaltungszweig ein Spannungsmessgerät angeordnet ist. Das Spannungsmessgerät kann zur Messung sowohl einer Ladespannung als auch einer Spannung dienen, die das Energieversorgungssystem über den Entladepfad bereitstellt. Aufgrund der in der Regel vergleichbaren Anforderungen an das Spannungsmessgerät beim Ladevorgang und beim Entladevorgang wird bevorzugt nur dieses eine Spannungsmessgerät in dem Energieversorgungssystem vorgesehen. Es sind aber auch Varianten der Erfindung denkbar, bei denen zusätzliche Spannungsmessgeräte zum Einsatz kommen, welche zum Beispiel im Ladepfad beziehungsweise im Entladepfad angeordnet sein können.

Gemäß einer weiteren Variante der Erfindung ist das Energieversorgungssystem dazu eingerichtet, Energie, die von einer externen Energiequelle über den Ladepfad dem Verschaltungszweig zugeführt wird, auf mindestens ein erstes Fehlercharakteristikum zu prüfen, und sich bei Detektion des ersten Fehlercharakteristikums abzuschalten. So wird bei Fehlerfällen beim Laden eine Abschaltung des Energieversorgungssystems gewährleistet. Es ist erfindungsgemäß möglich, dass das erste Fehlercharakteristikum ausgewählt ist aus der Gruppe umfassend ein Vorhandensein eines Überstroms, ein Vorhandensein einer Überspannung, ein Überschreiten einer Anstiegsgeschwindigkeit einer Spannung, ein Überschreiten einer Abfallgeschwindigkeit einer Spannung und ein Über- oder ein Unterschreiten einer Spannungsfrequenz. Es ist prinzipiell aber auch eine Überprüfung auf ein Vorhandensein sonstiger Fehlercharakteristika denkbar.

Das Energieversorgungssystem kann erfindungsgemäß dazu eingerichtet sein, bei einer Abgabe von elektrischer Energie über den Entladepfad auf mindestens ein zweites Fehlercharakteristikum zu prüfen, und sich bei Detektion des zweiten Fehlercharakteristikums abzuschalten. So wird bei Fehlerfällen beim Entladen eine Abschaltung des Energieversorgungssystems gewährleistet. Es ist bevorzugt, wenn das zweite Fehlercharakteristikum ausgewählt ist aus der Gruppe umfassend ein Vorhandensein eines Überstroms, ein Vorhandensein einer Überlast, ein Vorhandensein eines Stromrückflusses und ein Vorhandensein einer überhöhten Blindleistung. Es ist prinzipiell aber auch eine Überprüfung auf ein Vorhandensein sonstiger Fehlercharakteristika denkbar.

Vorzugsweise ist in dem Ladepfad eine Gleichrichterbrücke angeordnet. Auf diese Weise kann verhindert werden, dass das Energieversorgungssystem bei Fehlerfällen elektrische Energie in ein Versorgungsnetz einspeist, aus dem es elektrische Energie lediglich beziehen soll. Es ist außerdem vorteilhaft, wenn in dem Ladepfad mindestens eine erste Überstromschutzeinrichtung angeordnet ist, wobei in dem Entladepfad mindestens eine zweite Überstromschutzeinrichtung angeordnet ist, und wobei ein Auslösestrom der mindestens einen zweiten Überstromschutzeinrichtung mindestens doppelt so groß ist wie ein Auslösestrom der mindestens einen ersten Überstromschutzeinrichtung. Gemäß einer anderen Variante der Erfindung kann es vorgesehen sein, dass der Auslösestrom der ersten Überstromschutzeinrichtung höchstens 8 A beträgt und der Auslösestrom der zweiten Überstromschutzeinrichtung mindestens 15 A beträgt. Unter einer Überstromschutzeinrichtung im Sinne dieser Erfindung ist eine elektrische Sicherung zu verstehen, insbesondere ein Leistungsschutzschalter oder dergleichen.

Bevorzugt ist das Energieversorgungssystem so ausgebildet, dass es eine elektrische Verschaltung des Ladepfads mit dem Entladepfad erlaubt, insofern der Entladepfad nicht mit dem Verschaltungszweig verschaltet ist. Somit kann in besonderen Fällen der Ladepfad mit dem Entladepfad elektrisch leitfähig verbunden werden beziehungsweise der Verschaltungszweig wird überbrückt. Dies kann zum Beispiel dazu dienen, um einen an das Energieversorgungssystem angeschlossenen Verbraucher über ein Versorgungsnetz, an welches das Energieversorgungssystem ebenfalls angeschlossen ist, mit elektrischer Energie zu versorgen. Zur Überbrückung des Verschaltungszweigs kann gemäß einer vorteilhaften Ausführungsform der Erfindung eine Schalteinrichtung wie ein Relais vorgesehen sein.

Vorteilhafte Varianten der Erfindung werden in den Zeichnungen beispielhaft dargestellt. Dabei zeigt:
Fig. 1 eine schematische Darstellung einer Variante des erfindungsgemäßen Energieversorgungssystems,
Fig. 2 eine schematische Darstellung einer Batterieanordnung des Energieversorgungssystems gemäß Fig. 1,
Fig. 3 eine schematische Darstellung eines Batteriemoduls der Batterieanordnung gemäß Fig. 2,
Fig. 4 eine schematische Darstellung einer Brückenschaltung des Batteriemoduls gemäß Fig. 3 und
Fig. 5 eine schematische Darstellung einer zweiten Variante des erfindungsgemäßen Energieversorgungssystems.

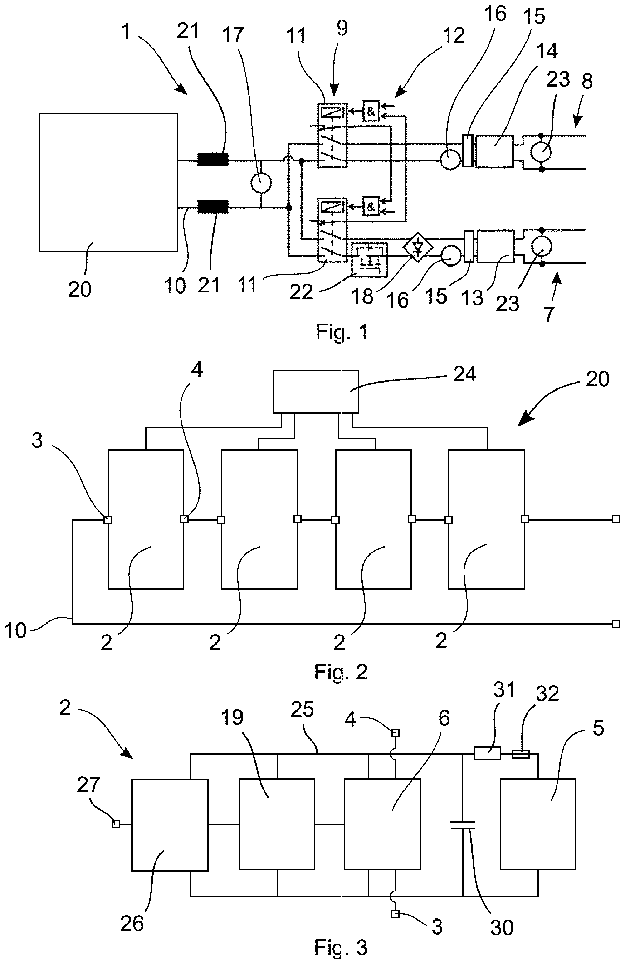

Fig. 1 zeigt eine schematische Darstellung einer Variante des erfindungsgemäßen Energieversorgungssystems 1. Das Energieversorgungssystem 1 weist einen Ladepfad 7 und einen Entladepfad 8 auf. Der Ladepfad 7 kann beispielsweise an ein Versorgungsnetz angeschlossen werden, sodass das Energieversorgungssystem 1 aufgeladen werden kann. Das Versorgungsnetz stellt eine Wechselspannung bereit. Der Entladepfad 8 kann an einen Verbraucher angeschlossen werden, der über den Entladepfad 8 elektrische Energie von dem Energieversorgungssystem 1 beziehen kann. Das Energieversorgungssystem 1 kann eine Wechselspannung bereitstellen. In einer Batterieanordnung 20 des Energieversorgungssystems 1 sind Akkumulatoren befindlich, die zum Speichern elektrischer Energie dienen. Die Akkumulatoren sind in einem Verschaltungszweig 10 angeordnet.

Ein Schaltmittel 9, das zwei Relais 11 aufweist, kann wahlweise den Ladepfad 7 oder den Entladepfad 8 mit dem Verschaltungszweig 10 verbinden. Das Energieversorgungssystem 1 weist ferner eine Verriegelungsschaltung 12 auf. Diese stellt sicher, dass zu jedem Zeitpunkt entweder der Ladepfad 7 oder der Entladepfad 8 mit dem Verschaltungszweig 10 verbunden ist, aber nie beide Pfade gleichzeitig. Somit ist stets eine galvanische Trennung zwischen dem Ladepfad 7 und dem Entladepfad 8 gewährleistet.

Die Unterteilung in einen Ladepfad 7 und einen Entladepfad 8 erlaubt eine angepasste Dimensionierung diverser Bauteile. In dem Ladepfad 7 ist ein Eingangsfilter 13 angeordnet und in dem Entladepfad 8 ist ein Ausgangsfilter 14 angeordnet, die den jeweiligen Anforderungen im Ladepfad 7 und im Entladepfad 8 speziell angepasst sind. Das Ausgangsfilter 14 ist ohne ein induktives Bauelement 21 ausgeführt. Das Eingangsfilter 13 weist hingegen ein induktives Bauelement 21 auf. Um die Filterwirkung des Eingangsfilters 13 und des Ausgangsfilters 14 zu komplementieren, sind in dem Verschaltungszweig diesen zugeordnete induktive Bauelemente 21 angeordnet, welche sich das Eingangsfilter 13 und das Ausgangsfilter 14 sozusagen teilen. Ferner weist das Energieversorgungssystem 1 in dem Ladepfad 7 und dem Entladepfad 8 auch jeweils speziell für die Anforderungen in den jeweiligen Pfaden angepasste EMV-Filter 15 auf. Die unterschiedliche Dimensionierung von Bauteilen betrifft auch Strommessgeräte 16 des Energieversorgungssystems 1, die in dem Ladepfad 7 beziehungsweise dem Entladepfad 8 angeordnet sind. So ist das Strommessgerät 16 in dem Ladepfad 7 für einen vergleichsweise niedrigen maximalen Messstrom ausgelegt, und das Strommessgerät 16 in dem Entladepfad 8 ist für einen vergleichsweise hohen maximalen Messstrom ausgelegt. Hingegen kommt unabhängig davon, ob der Ladepfad 7 oder der Entladepfad 8 mit dem Verschaltungszweig 10 verschaltet ist, ein Spannungsmessgerät 17 zur Verwendung, das in dem Verschaltungszweig 10 angeordnet ist.

Ferner weist das Energieversorgungssystem 1 eine Gleichrichterbrücke 18 auf, die in dem Ladepfad 7 angeordnet ist. Mittels der Gleichrichterbrücke 18 kann verhindert werden, dass elektrische Energie aus dem Energieversorgungssystem 1 über den Ladepfad 7 zurück in das Versorgungsnetz fließt. Das Energieversorgungssystem 1 ist außerdem mit einem Schalter 22 ausgestattet, der in dem Ladepfad 7 angeordnet ist und bei Bedarf den Verschaltungszweig 10 mit geringer Verzögerung von dem Versorgungsnetz trennen kann, zum Beispiel bei Spannungsspitzen oder bestimmten Fehlerfällen. Eine Spannung unmittelbar am Versorgungsnetz bzw. am Verbraucher kann mittels zusätzlicher Spannungsmessgeräte 23 im Ladepfad 7 und dem Entladepfad 8 gemessen werden.

Fig. 2 zeigt eine schematische Darstellung der Batterieanordnung 20 des Energieversorgungssystems gemäß Fig. 1. In der Batterieanordnung 20 ist eine Vielzahl von Batteriemodulen 2 angeordnet. Diese sind in dem Verschaltungszweig 10 in Reihe geschaltet. Jedes Batteriemodul 2 weist einen ersten elektrischen Anschluss 3 sowie einen zweiten elektrischen Anschluss 4 auf, über welche das jeweilige Batteriemodul 2 an dem Verschaltungszweig 10 angeschlossen ist. Eine Steuereinheit 24 des Energieversorgungssystems steuert die Batteriemodule 2 bei einem Entladevorgang in geeigneter Weise an, sodass deren Spannungen in Summe eine annähernd sinusförmige Wechselspannung ergeben. Bei einem Ladevorgang steuert die Steuereinheit 24 die Batteriemodule 2 so an, dass Akkumulatoren in den Batteriemodulen 2 stets mit einer Spannung korrekter Polarität beschaltet sind und somit aufgeladen werden können.

Fig. 3 zeigt eine schematische Darstellung eines der Batteriemodule 2 der Batterieanordnung gemäß Fig. 2. Das Batteriemodul 2 weist einen Akkumulator 5 auf, der elektrisch aufgeladen und entladen werden kann. Das Batteriemodul 2 weist ferner eine Brückenschaltung 6 auf, die mit dem ersten elektrischen Anschluss 3 und dem zweiten elektrischen Anschluss 4 des Batteriemoduls 2 verbunden ist. Die Brückenschaltung 6 kann unterschiedliche Schaltzustände annehmen. So kann sie zum Beispiel eine Polarität, mit der der erste elektrische Anschluss 3 und der zweite elektrische Anschluss 4 des Batteriemoduls 2 mit einem Innenzweig 25 des Batteriemoduls 2 verschaltet sind, verändern. Die Brückenschaltung 6 kann ferner den Innenzweig 25 überbrücken. Durch eine geeignete Änderung der Schaltzustände kann eine Vielzahl von in Reihe angeordneten Batteriemodulen 2 somit eine Wechselspannung bereitstellen. Ferner ist es möglich, den Akkumulator 5 aufzuladen, obwohl der Ladepfad des Energieversorgungssystems an eine Wechselspannungsquelle angeschlossen ist. Das Batteriemodul 2 weist außerdem eine Isolationsvorrichtung 26 auf. Diese trennt ein Inneres des Batteriemoduls 2 galvanisch von einem Steueranschluss 27 des Batteriemoduls 2 und enthält zu diesem Zweck einen Optokoppler. Alternativ könnte anstatt des Optokopplers ein digitaler Isolator verwendet werden.

Eine Brückensteuerung 19 des Batteriemoduls 2 erhält ein von der Steuereinheit generiertes Signal, das einen gewünschten Schaltzustand angibt. Dieses Signal wird der Brückensteuerung 19 ausgehend von dem Steueranschluss 27 über die Isolationsvorrichtung 26 zugeführt. In Abhängigkeit von dem Signal steuert die Brückensteuerung 19 die Brückenschaltung 6 so an, dass sich der durch das Signal vorgegebene Schaltzustand einstellt. In dem Innenzweig 25 ist ein Kondensator 30 angeordnet. Eine Trennvorrichtung 31 in dem Innenzweig 25 erlaubt es, bei Bedarf den Akkumulator 5 von dem Innenzweig 25 zu trennen. Ferner ist eine Sicherung 32 in dem Innenzweig 25 vorgesehen, die bei einem Überstrom eine Trennung des Akkumulators 5 von dem Innenzweig 25 bewirkt.

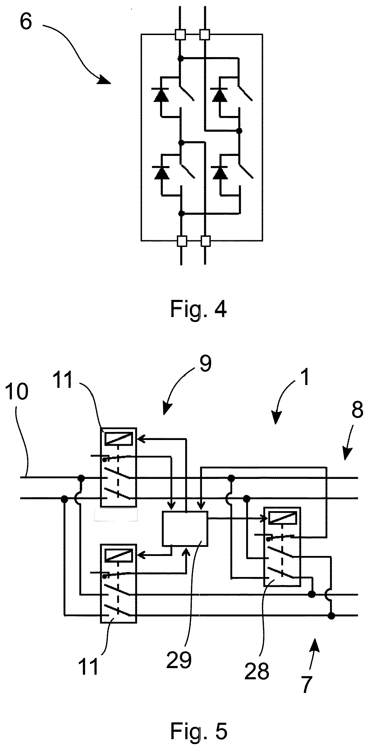

Fig. 4 zeigt eine schematische Darstellung der Brückenschaltung 6 des Batteriemoduls gemäß Fig. 3. Dabei handelt es sich um eine Vollbrücke, es können somit besonders viele Schaltzustände ermöglicht werden. Gemäß anderen Ausführungsformen der Erfindung kann zum Beispiel aber auch eine Halbbrücke zum Einsatz kommen.

Fig. 5 zeigt eine schematische Darstellung einer zweiten Variante des erfindungsgemäßen Energieversorgungssystems 1. Dargestellt ist ein Teil des Energieversorgungssystems 1, in dem ein Verschaltungszweig 10 des Energieversorgungssystem 1 mit einem Ladepfad 7 und einem Entladepfad 8 des Energieversorgungssystems über ein Schaltmittel 9 koppelbar ist, das zwei Relais 11 aufweist. Das Schaltmittel 9 erlaubt es, wahlweise entweder den Ladepfad 7 oder den Entladepfad 8 mit dem Verschaltungszweig 10 zu verbinden. Ein Durchschaltrelais 28 des Energieversorgungssystems 1 ermöglicht es, den Ladepfad 7 unmittelbar mit dem Entladepfad 8 zu verbinden. Wenn ein Verbraucher an das Energieversorgungssystem 1 angeschlossen ist und das Energieversorgungssystem 1 ferner an ein Versorgungsnetz angeschlossen ist, kann der Verbraucher wahlweise mittels der Batteriemodule des Energieversorgungsmoduls oder aus dem Versorgungsnetz gespeist werden. Eine Durchschaltsteuerung 29 stellt sicher, dass das Schaltmittel 9 und das Durchschaltrelais 28 keine unzulässigen Schaltzustände annehmen können.

### Bezugszeichenliste

- 1.: Energieversorgungssystem
- 2.: Batteriemodul
- 3.: Erster elektrischer Anschluss
- 4.: Zweiter elektrischer Anschluss
- 5.: Akkumulator
- 6.: Brückenschaltung
- 7.: Ladepfad
- 8.: Entladepfad
- 9.: Schaltmittel
- 10.: Verschaltungszweig
- 11.: Relais
- 12.: Verriegelungsschaltung
- 13.: Eingangsfilter
- 14.: Ausgangsfilter
- 15.: EMV-Filter
- 16.: Strommessgerät
- 17.: Spannungsmessgerät
- 18.: Gleichrichterbrücke
- 19.: Brückensteuerung
- 20.: Batterieanordnung
- 21.: Induktives Bauelement
- 22.: Schalter
- 23.: Zusätzliches Spannungsmessgerät
- 24.: Steuereinheit
- 25.: Innenzweig
- 26.: Isolationsvorrichtung
- 27.: Steueranschluss
- 28.: Durchschaltrelais
- 29.: Durchschaltsteuerung
- 30.: Kondensator
- 31.: Trennvorrichtung
- 32.: Sicherung

## Patentansprüche

1. Energieversorgungssystem (1)
mit einer Vielzahl von Batteriemodulen (2), wobei jedes Batteriemodul (2) einen ersten elektrischen Anschluss (3) und einen zweiten elektrischen Anschluss (4) aufweist, über welche die Batteriemodule (2) in einem Verschaltungszweig (10) des Energieversorgungssystems (1) in Serie geschaltet sind, wobei jedes Batteriemodul (2) ferner einen Akkumulator (5) aufweist, der über eine Brückenschaltung (6) des Batteriemoduls (2) mit dem ersten elektrischen Anschluss (3) und dem zweiten elektrischen Anschluss (4) verschaltbar ist, und
mit einem Ladepfad (7), über den das Energieversorgungssystem (1) geladen werden kann, sowie mit einem Entladepfad (8), über den das Energieversorgungssystem (1) elektrische Energie an einen angeschlossenen Verbraucher abgeben kann,
wobei das Energieversorgungssystem (1) ein Schaltmittel (9) aufweist, an das der Ladepfad (7), der Entladepfad (8) und der Verschaltungszweig (10) angeschlossen sind, und wobei das Schaltmittel (9) den Ladepfad (7) und/oder den Entladepfad (8) mit dem Verschaltungszweig (10) elektrisch leitfähig verbinden kann.

2. Energieversorgungssystem nach Anspruch 1, **dadurch gekennzeichnet, dass** das Schaltmittel (9) wahlweise eine Verschaltung entweder des Ladepfads (7) oder des Entladepfads (8) mit dem Verschaltungszweig (10) ermöglicht.

3. Energieversorgungssystem (1) nach Anspruch 2, **dadurch gekennzeichnet, dass** das Schaltmittel (9) so ausgebildet ist, dass es den Ladepfad (7) von dem Entladepfad (8) zu jedem Betriebszeitpunkt galvanisch trennt.

4. Energieversorgungssystem (1) nach einem der vorhergehenden Ansprüche, **dadurch gekennzeichnet, dass** das Schaltmittel (9) mindestens ein Relais (11) aufweist.

5. Energieversorgungssystem (1) nach einem der vorhergehenden Ansprüche, **dadurch gekennzeichnet, dass** das Schaltmittel (9) zwei DPST-Relais mit Spiegelkontakten oder ein DPDT-Relais aufweist.

6. Energieversorgungssystem (1) nach einem der vorhergehenden Ansprüche, **dadurch gekennzeichnet, dass** das Energieversorgungssystem (1) keine isolierende Konverterschaltung zwischen dem Verschaltungszweig (10) und dem Ladepfad (7) beziehungsweise dem Entladepfad (8) aufweist.

7. Energieversorgungssystem (1) nach einem der vorhergehenden Ansprüche, **dadurch gekennzeichnet, dass** der Ladepfad (7) und der Entladepfad (8) jeweils zwei Zweige aufweisen.

8. Energieversorgungssystem (1) nach einem der vorhergehenden Ansprüche, **dadurch gekennzeichnet, dass** das Energieversorgungssystem (1) ein Eingangsfilter (13) in dem Ladepfad (7) und ein Ausgangsfilter (14) in dem Entladepfad (8) aufweist, wobei das Eingangsfilter (13) eine vergleichsweise hohe Gesamtinduktivität aufweist und für vergleichsweise niedrige Ströme ausgelegt ist, und wobei das Ausgangsfilter (14) eine vergleichsweise niedrige Gesamtinduktivität aufweist und für vergleichsweise hohe Ströme ausgelegt ist.

9. Energieversorgungssystem (1) nach einem der Ansprüche 1 bis 7, **dadurch gekennzeichnet, dass** das Energieversorgungssystem ein Eingangsfilter in dem Ladepfad (7) und ein Ausgangsfilter (14) in dem Entladepfad (8) aufweist, wobei das Ausgangsfilter (14) ohne ein induktives Bauelement ausgeführt ist, und wobei in dem Verschaltungszweig (10) mindestens ein induktives Bauelement den Batteriemodulen (2) vorgeschaltet ist.

10. Energieversorgungssystem (1) nach einem der vorhergehenden Ansprüche, **dadurch gekennzeichnet, dass** in dem Ladepfad (7) ein EMV-Filter (15) angeordnet ist, das eine vergleichsweise hohe Filterinduktivität sowie eine vergleichsweise hohe Filterkapazität aufweist und für vergleichsweise niedrige Ströme ausgelegt ist, und wobei in dem Entladepfad (8) ein EMV-Filter angeordnet ist, das eine vergleichsweise niedrige Filterinduktivität sowie eine vergleichsweise niedrige oder keine Filterkapazität aufweist und für vergleichsweise hohe Ströme ausgelegt ist.

11. Energieversorgungssystem (1) nach einem der vorhergehenden Ansprüche, **dadurch gekennzeichnet, dass** in dem Ladepfad (7) ein Strommessgerät (16) angeordnet ist, das für einen vergleichsweise niedrigen maximalen Messstrom ausgelegt ist, und dass in dem Entladepfad (8) ein Strommessgerät (16) angeordnet ist, das für einen vergleichsweise hohen maximalen Messstrom ausgelegt ist.

12. Energieversorgungssystem (1) nach einem der vorhergehenden Ansprüche, **dadurch gekennzeichnet, dass** in dem Verschaltungszweig (10) ein Spannungsmessgerät (17) angeordnet ist.

13. Energieversorgungssystem (1) nach einem der vorhergehenden Ansprüche, **dadurch gekennzeichnet, dass** das Energieversorgungssystem (1) dazu eingerichtet ist, elektrische Energie, die von einer externen Energiequelle über den Ladepfad (7) dem Verschaltungszweig (10) zugeführt wird, auf mindestens ein erstes Fehlercharakteristikum zu prüfen, und sich bei Detektion des ersten Fehlercharakteristikums abzuschalten.

14. Energieversorgungssystem (1) nach einem der vorhergehenden Ansprüche, **dadurch gekennzeichnet, dass** das Energieversorgungssystem (1) dazu eingerichtet ist, bei einer Abgabe von elektrischer Energie über den Entladepfad (8) auf mindestens ein zweites Fehlercharakteristikum zu prüfen, und sich bei Detektion des zweiten Fehlercharakteristikums abzuschalten.

15. Energieversorgungssystem (1) nach einem der vorhergehenden Ansprüche, **dadurch gekennzeichnet, dass** in dem Ladepfad (7) eine Gleichrichterbrücke (18) angeordnet ist.

16. Energieversorgungssystem (1) nach einem der vorhergehenden Ansprüche, **dadurch gekennzeichnet, dass** in dem Ladepfad (7) mindestens eine erste Überstromschutzeinrichtung angeordnet ist, wobei in dem Entladepfad (8) mindestens eine zweite Überstromschutzeinrichtung angeordnet ist, und wobei ein Auslösestrom der mindestens einen zweiten Überstromschutzeinrichtung mindestens doppelt so groß ist wie ein Auslösestrom der mindestens einen ersten Überstromschutzeinrichtung.

17. Energieversorgungssystem (1) nach einem der vorhergehenden Ansprüche, **dadurch gekennzeichnet, dass** das Energieversorgungssystem (1) so ausgebildet ist, dass es eine elektrische Verschaltung des Ladepfads (7) mit dem Entladepfad (8) erlaubt, insofern der Entladepfad (8) nicht mit dem Verschaltungszweig (10) verschaltet ist.
